# EUROPÄISCHE PATENTANMELDUNG

(11) **EP 4 560 142 A1**
(43) Veröffentlichungstag der Anmeldung: **28.05.2025**
(21) Anmeldenummer: 24214435.0
(22) Anmeldetag: 21.11.2024
(51) Int. Cl.: F04D 27/00, F04D 29/42, G01F 1/10

(54) **STRÖMUNGSMASCHINE MIT EINEM VERTIKALACHSEN-ANEMOMETER**

(30) Priorität: 23.11.2023 DE 102023132685
(71) Anmelder: ebm-papst Mulfingen GmbH & Co. KG, 74673 Mulfingen (DE)
(72) Erfinder: GEBERT, Daniel, 74613 Öhringen (DE); MAYER, Jonathan, 75417 Mühlacker (DE); GAKSTATTER, Michael, 97999 Igersheim (DE)
(74) Vertreter: Staeger & Sperling Partnerschaftsgesellschaft mbB

(57) **Zusammenfassung**

Die Erfindung betrifft eine Strömungsmaschine (4) mit einer entlang einer Hauptströmungsachse (S) von einem Fluid durchströmbaren Fläche (3) und einem Vertikalachsen-Anemometer (1) zur Erfassung einer repräsentativen mittleren Strömungsgeschwindigkeit eines zweidimensionalen Geschwindigkeitsprofils (2) für die Bestimmung eines dreidimensionalen und insbesondere ein vorbekanntes Profil und/oder eine vorbekannte Symmetrie aufweisenden Volumenstroms durch eine entlang einer Hauptströmungsachse (S) von einem Fluid durchströmbaren Fläche (3), wobei das Vertikalachsen-Anemometer (1) ein Laufrad (10) mit zumindest einer Laufradschaufel (11) aufweist, welches um eine Rotationsachse (A) rotierbar ist, wobei sich die Rotationsachse (A) entlang einer Linie über die durchströmbare Fläche (3) erstreckt und das Laufrad (10) und/oder die zumindest eine Laufradschaufel (11) ausgebildet ist, sich parallel der Rotationsachse (A) über die durchströmbare Fläche (3) zu erstrecken, sodass durch die Rotation des Laufrades (10) die Strömungsgeschwindigkeit entlang der Linie als mittlere Strömungsgeschwindigkeit des entlang der Linie verlaufenden zweidimensionalen Geschwindigkeitsprofils (2) erfassbar ist.

## Beschreibung

Die Erfindung betrifft eine Strömungsmaschine mit einem Anemometer zur Ermittlung eines Volumenstroms durch einen von einer Strömung entlang einer Hauptströmungsachse bzw. Hauptströmungsrichtung durchströmbaren Fläche, welches als Vertikalachsen-Anemometer bezeichnet werden kann.

Aus dem Stand der Technik sind verschiedenste Lösungen zur Messung bzw. Ermittlung von Volumenströmen bekannt. So lehrt die DE 10 2016 115 615 A1 beispielsweise ein Radialgebläse an dessen Gebläseauslass ein Flügelradanemometer gehalten bzw. befestigt ist, sodass durch das Flügelradanemometer der Volumenstrom durch den eine runde Querschnittsfläche bestimmenden Gebläseauslass erfasst werden kann.

Dies hat jedoch einige Nachteile. So erstreckt sich das Flügelradanemometer über die gesamte Querschnittsfläche, sodass entsprechend die gesamte Strömung durch das Flügelradanemometer beeinflusst und gegebenenfalls mit Strömungsstörungen oder Turbulenzen beaufschlagt wird. Weiter muss die durchströmte Fläche bzw. Querschnittsfläche hierbei auch rund sein, sodass das Flügelradanemometer den gesamten Querschnitt ausfüllen kann.

Um auch andere Querschnittsformen bzw. -flächen des Gebläseauslasses zu ermöglichen, schlägt die DE 10 2019 205 041 A1 zudem ein einlass- bzw. saugseitiges Flügelradanemometer an einem Gebläse vor, wobei sich das Flügelradanemometer bzw. das Flügelrad des Anemometers hierzu wiederum über den gesamten saugseitigen Querschnitt erstrecken und dieser wiederum rund ausgebildet sein muss.

Um den Volumenstrom an alternativ geformten und beispielsweise rechteckigen Querschnitten ermitteln zu können, insbesondere an einem Gebläseauslass aber auch beispielsweise in einem Strömungskanal, sind im Stand der Technik zudem Varianten bekannt, bei welchen der durchströmbare Querschnitt beispielsweise in mehrere Segmente unterteilt wird, in welchen jeweils ein Flügelradanemometer angeordnet ist, wobei hierdurch die Strömung durch den Querschnitt oftmals stark gestört wird. Auch können mehrere Drucksensoren verwendet werden, welche jedoch einen vergleichsweise komplexen Aufbau und eine vergleichsweise komplexe Berechnung des Volumenstroms bedingen.

Der Erfindung liegt deshalb die Aufgabe zugrunde, die vorgenannten Nachteile zu überwinden und ein Anemometer zur möglichst einfachen Bestimmung eines Volumenstroms durch einen insbesondere quadratischen Querschnitt bereitzustellen, durch welches die Strömung möglichst wenig beeinflusst wird, sowie eine Strömungsmaschine mit einem solchen Anemometer.

Diese Aufgabe wird durch die Merkmalskombination gemäß Patentanspruch 1 gelöst.

Erfindungsgemäß wird daher eine Strömungsmaschine, wie sie durch Anspruch 1 definiert ist, vorgeschlagen. Die Strömungsmaschine weist ein Anemometer zur Erfassung einer repräsentativen mittleren Strömungsgeschwindigkeit eines zweidimensionalen Geschwindigkeitsprofils für die Bestimmung eines dreidimensionalen Volumenstroms durch eine entlang einer Hauptströmungsachse von einem Fluid durchströmbare Fläche bzw. Querschnittsfläche auf, welches aufgrund des im Weiteren noch erläuterten Verlaufs der Rotationsachse zu der Hauptströmungsachse auch als Vertikalachsen-Anemometer bezeichenbar ist. Dabei handelt es sich bei der durchströmbaren Fläche vorzugsweise um eine quadratische oder rechteckige Fläche, wobei auch andere Formen und beispielsweise eine runde bzw. kreisförmige Fläche möglich ist. Weiter ist vorteilhaft, wenn der dreidimensionale Volumenstrom bzw. das den dreidimensionalen Volumenstrom bestimmende Strömungsfeld symmetrisch, beispielsweise rotationssymmetrisch, ist oder dass die Proportionen bzw. der Aufbau des Strömungsfeldes bekannt sind, sodass von der Strömungsgeschwindigkeit entlang einer Linie auf die Strömungsgeschwindigkeit über den gesamten Querschnitt bzw. über die gesamte Fläche geschlossen werden kann. Erfindungsgemäß ist dabei vorgesehen, dass das Vertikalachsen-Anemometer ein Laufrad mit zumindest einer Laufradschaufel aufweist, welches um eine Rotationsachse rotierbar ist. Dabei verläuft die Rotationsachse vorzugsweise orthogonal zu der Hauptströmungsachse und entlang einer Linie über die durchströmbare Fläche, sodass also die Linie bzw. das Laufrad die durchströmbare Fläche, vorzugsweise in eine Breitenrichtung und insbesondere entlang bzw. parallel einer kürzesten die Fläche begrenzenden Kante überspannt. Alternativ zu einer orthogonalen Ausrichtung der Rotationsachse zu der Hauptströmungsachse ist ferner denkbar, dass die Rotationsachse in einem vorbestimmten Winkel zu der Hauptströmungsachse verläuft, wobei der Winkel zwischen Hauptströmungsachse und Rotationsachse hierbei vorzugsweise größer 45°, weiter vorzugsweise größer 65°, weiter vorzugsweise größer 85° und insbesondere jeweils kleiner 90° ist. Dabei ist das Laufrad und/oder dessen zumindest eine Laufradschaufel ausgebildet, sich parallel der Rotationsachse über die durchströmbare Fläche und insbesondere deren Breite bzw. gesamte Breite zu erstrecken, sodass durch die Rotation des Laufrades die Strömungsgeschwindigkeit entlang der Linie als mittlere Strömungsgeschwindigkeit eines entlang der Linie verlaufenden zweidimensionalen Geschwindigkeitsprofils der die Fläche durchströmenden Strömung erfassbar ist.

Wie beschrieben, kann dabei durch die Symmetrie des Strömungsfeldes oder durch die Kenntnis der Proportionen bzw. des Verlaufs des Strömungsfeldes von der mittleren Strömungsgeschwindigkeit entlang der Linie, also entlang eines zweidimensionalen Verlaufs, auf die Strömungsgeschwindigkeiten des dreidimensionalen Strömungsfeldes durch die Fläche bzw. durch den Querschnitt geschlossen werden, sodass entsprechend aus der mittleren Strömungsgeschwindigkeit der Volumenstrom durch den Querschnitt bzw. durch die durchströmbare Fläche bestimmt werden kann.

Dabei handelt es sich bei dem Laufrad zumindest abschnittweise vorzugsweise um einen Savonius-Rotor oder um einen Darrieus-Rotor oder um eine Radialturbine mit entsprechend ausgebildeten Laufradschaufeln. Grundsätzlich sind jedoch auch andere Vertikal-Rotoren bzw. Rotortypen, wie beispielsweise Heidelberg-Rotor, Schalen-Rotor oder H-Rotor sowie auch Misch- bzw. Hybridformen möglich, soweit die erfindungsgemäß gestellte Aufgabe durch diese erfüllt werden kann.

Ein Verhältnis von einem Durchmesser des Laufrads, also orthogonal der Rotationsachse, zu einer Länge des Laufrads, entlang der Rotationsachse, beträgt dabei insbesondere 0,01 bis 1, vorzugsweise 0,05 bis 0,5 und weiter vorzugsweise 0,1 bis 0,3.

Allgemein gilt, dass die Länge des Laufrades vorzugsweise ein Vielfaches des Durchmessers des Laufrades ist.

Da die Länge des Laufrades auch der Breite der Fläche entsprechen bzw. diese vollständig überspannen kann, wird dadurch auch das Verhältnis des Durchmessers des Laufrades zu der insbesondere rechteckigen Fläche bestimmt.

Ausgehend von einer rechteckigen Fläche bzw. einem rechteckigen Querschnitt, über dessen gesamte Breite sich das Laufrad erstreckt, ist vorzugsweise vorgesehen, dass das Laufrad sich - entsprechend den genannten Verhältnissen - über nur einen geringen Teil der Länge des Querschnitts erstreckt und die Strömung entsprechend gering beeinflusst. Es kann jedoch gegebenenfalls auch vorgesehen sein, dass das Laufrad sich über die gesamte Länge des Querschnitts erstreckt und den Querschnitt dadurch vollständig überdeckt bzw. ausfüllt, was insbesondere dann vorteilhaft ist, wenn es keine bzw. keine bekannte Symmetrie in dem Strömungsfeld gibt.

Generell weist das Laufrad entlang der Rotationsachse einen Abschnitt auf oder ist entlang der Rotationsachse in mehrere Abschnitte geteilt, wobei je Abschnitt vorzugsweise zwei oder drei Laufradschaufeln vorgesehen sind. Zwischen den Abschnitten kann jeweils eine orthogonal zu der Rotationsachse angeordnete Zwischenscheibe vorgesehen sein, wobei sich die Laufradschaufeln über die Zwischenscheiben hinweg erstrecken oder jeweils an den Zwischenscheiben enden können.

Beispielsweise kann ein Laufrad mit zwei oder mehr Abschnitten vorgesehen sein, wobei die Abschnitte von einer Zwischenscheibe getrennt sind und der erste sowie der letzte Abschnitt entlang der Rotationsachse durch die im Weiteren noch erläuterten stirnseitig abschließenden Endscheiben begrenzt sind. Je Abschnitt können wiederum zwei oder drei Laufradschaufeln vorgesehen sein, wobei die Laufradschaufeln eines Abschnitts - unabhängig von dem beschriebenen Beispiel - gegenüber den Laufradschaufeln angrenzender Abschnitte bezüglich ihrer Position in Umfangsrichtung verdreht oder abweichend ausgebildet sein können.

Weiter kann das Laufrad in einem der Abschnitte beispielsweise als Savonius-Rotor oder als ein anderer Rotortyp und in einem anderen Abschnitt als Radialturbine ausgebildet sein, wodurch das Laufrad hinsichtlich Anlaufverhalten und dem anschließenden Rotationsverhalten optimiert werden kann.

Eine vorteilhafte Weiterbildung sieht zudem vor, dass die zumindest eine Laufradschaufel die Rotationsachse gewunden und insbesondere helixförmig umläuft, wodurch das Anlaufverhalten des Laufrades verbessert wird.

Weiter kann das Laufrad zwei das Laufrad entlang der Linie jeweils stirnseitig abschließende Endscheiben aufweisen, zwischen welchen sich die zumindest eine Laufradschaufel erstreckt, sodass das Laufrad im Wesentlichen zylindrisch ist.

Eine Variante sieht zudem vor, dass das Anemometer ferner zumindest ein Leitelement aufweist, welches entlang der Hauptströmungsachse stromauf des Laufrades angeordnet und ausgebildet ist, die Strömung und insbesondere die auf das Laufrad treffende Strömung gleichzurichten, umzulenken und/oder abzuschatten, sodass also nicht relevante bzw. ungewünschte Strömungskomponenten berücksichtigt werden können.

Weiter weist das Anemometer vorzugsweise eine Steuereinheit auf, welche ausgebildet ist, aus einer Drehzahl des Laufrades die mittlere Geschwindigkeit der Strömung entlang der Linie zu bestimmen und aus der mittleren Geschwindigkeit der Strömung entlang der Linie den Volumenstrom durch die Fläche zu bestimmen. Hierfür kann die Fläche bzw. deren Form und/oder die Symmetrie des Strömungsfeldes und/oder das Verhältnis der mittleren Geschwindigkeit entlang der Linie zu dem dreidimensionalen Strömungsfeld beispielsweise als Formel in der Steuereinheit hinterlegt sein.

Um die Drehzahl des Laufrades erfassen zu können, kann das Anemometer ferner zumindest einen Drehzahlsensor aufweisen, welcher signaltechnisch mit der Steuereinheit verbunden ist. Vorzugsweise wird der Drehzahlsensor durch einen Hall-Sensor und einem mit dem Laufrad rotierenden magnetischen Element gebildet, wobei das magnetische Element beispielsweise an einer der Endscheiben vorgesehen oder in diese integriert sein kann.

Um die Strömung durch die Fläche nicht negativ zu beeinträchtigten, kann der Hall-Sensor außerhalb der Fläche bzw. seitlich der Fläche angeordnet sein.

Um die Volumenstrombestimmung weiter zu verbessern, können zudem weitere die Strömung beeinflussende Werte berücksichtigt werden. Hierzu kann die Steuereinheit ferner ausgebildet sein, zumindest einen Parameter einer die Strömung erzeugenden Vorrichtung, insbesondere eine Drehzahl eines Ventilator-Laufrades und/oder einen Motorstrom und/oder eine Motordrehzahl eines das Ventilator-Laufrad antreibenden Motors, zu erfassen und aus der mittleren Geschwindigkeit sowie dem zumindest einen Parameter den Volumenstrom durch die Fläche zu bestimmen.

Hinsichtlich der Strömungsmaschine ist ferner vorgesehen, dass dieseeine insbesondere von einem Kanal und/oder einem Strömungsauslass bestimmten sowie entlang einer Hauptströmungsachse von einem Fluid durchströmbare Fläche und das Anemometer aufweist. Bei der Strömungsmaschine kann es sich insbesondere um einen Ventilator, einen Radialventilator, einem Trommelläufer oder allgemein einem durchströmten Kanal handeln, wobei das Anemometer vorzugsweise abströmseitig bzw. an einem Auslass der jeweiligen Strömungsmaschine vorgesehen ist.

Insbesondere in Hinblick auf Ventilatoren, Radialventilatoren und Trommelläufern ist erfindungsgemäß vorgesehen, dass die Strömungsmaschine ferner ein Ventilator-Laufrad zur Erzeugung der Strömung durch die Fläche aufweist, welches um eine Ventilator-Rotationsachse rotierbar ist. Hierbei ist vorgesehen, dass die Rotationsachse des Anemometers bzw. die Rotationsachse des Laufrades des Anemometers und die Ventilator-Rotationsachse parallel oder orthogonal zueinander verlaufen.

Weiter kann die Strömungsmaschine ein das Ventilator-Laufrad zumindest abschnittsweise umgebende Gehäuse mit zumindest zwei entlang der Ventilator-Rotationsachse beabstandeten Wandungen aufweisen, welche von zumindest zwei Streben beabstandet bzw. aneinander fixiert werden. Das Anemometer kann hierbei eine der Streben bilden, ersetzen oder in die Strebe integriert sein, wodurch ein platz- bzw. bauraumsparender Aufbau ermöglicht wird.

Bei der Verwendung in bzw. an Ventilatoren, wie auch Radialventilatoren und Trommelläufern, hat das erfindungsgemäß vorgeschlagene Vertikal-Anemometer den Vorteil, dass eine von Zuströmstörungen an der Saugseite unabhängige Volumenstrommessung ermöglicht ist. Zugleich wird die Akustik des Ventilators, insbesondere dadurch, dass nicht zusätzliche Zuströmstörungen verursacht werden, nicht negativ beeinflusst. Gegenüber alternativen Lösungen, welche auf Druckmessungen basieren, ist die Verwendung des Vertikal-Anemometers zudem deutlich kostengünstiger. Auch bei kleinen Volumenströmen kann durch das Vertikal-Anemometer eine hohe Messgenauigkeit erreicht werden. Da die Rotationsachse des Anemometer-Laufrades quer bzw. orthogonal zur Hauptströmungsachse bzw. Hauptströmungsrichtung verläuft, beeinflussen Drallkomponenten in der Strömung das Messergebnis nicht. Zugleich wird durch vorgeschlagene Anemometer ein robuster Aufbau realisiert, bei welchem Verschmutzung und Temperaturunterschiede das Messergebnis nicht bzw. nicht maßgeblich beeinflussen.

Wird das erfindungsgemäß vorgeschlagene Anemometer unabhängig von einer Strömungsmaschine oder in einem Strömungskanal verwendet, gilt auch hier, dass eine - gegenüber einer auf Druckmessung basierenden Lösung - kostengünstige Volumenstrombestimmung ermöglicht ist, wobei wiederum eine hohe Messgenauigkeit für kleine Volumenströme ermöglicht wird. Dabei ist ein erfindungsgemäß vorgeschlagenes Anemometer auch in Kanälen mit beliebigen aber vorzugsweise rechteckigen Querschnitten und sich daraus ergebenden durchströmbaren Querschnittsflächen einsetzbar, wohingegen klassische Flügelrad-Anemometer meist nur bei runden Querschnitten verwendbar sind. Auch beeinflussen die Drallkomponenten in der Strömung das Messergebnis nicht, da Drehachse senkrecht zur Hauptströmungsrichtung bzw. -achse verläuft. Auch hier gilt, dass das erfindungsgemäße Anemometer einen robusten Aufbau besitzt bzw. ermöglicht, durch welchen Verschmutzung und Temperaturunterschiede das Messergebnis nicht bzw. nicht maßgeblich beeinflussen.

Dabei sieht eine weitere Ausgestaltung der Strömungsmaschine vor, dass diese eine (weitere) Steuereinheit aufweist, welche ausgebildet ist, mit dem von dem Anemometer bestimmten Volumenstrom einen Betriebspunkt der Strömungsmaschine zu bestimmen. Zusätzlich oder alternativ kann zudem vorgesehen sein, dass die (weitere) Steuereinheit ausgebildet ist, die Strömungsmaschine mit dem von dem Anemometer bestimmten Volumenstrom zu regeln.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein Radialventilator;
- Fig. 2a-c: ein Radialventilator mit Anemometer in drei Varianten;
- Fig. 3: ein Radialventilator mit einem Vertikal-Anemometer;
- Fig. 4: ein Trommelläufer mit einem Vertikal-Anemometer und orthogonal verlaufenden Rotationsachsen;
- Fig. 5: ein Trommelläufer mit einem Vertikal-Anemometer und parallel verlaufenden Rotationsachsen;
- Fig. 6: ein Strömungskanal mit Vertikal-Anemometer;
- Fig. 7: ein weiterer Strömungskanal mit Vertikal-Anemometer;
- Fig. 8a-b: ein Radialventilator mit einem in eine Strebe integrierten Vertikal-Anemometer;
- Fig. 9a-c: ein als Savonius-Rotor ausgeführtes Laufrad eines Vertikal-Anemometers;
- Fig. 10a-b: ein als Radialturbine ausgeführtes Laufrad eines Vertikal-Anemometers.

Die Figuren sind beispielhaft schematisch. Gleiche Bezugszeichen in den Figuren weisen auf gleiche funktionale und/oder strukturelle Merkmale hin.

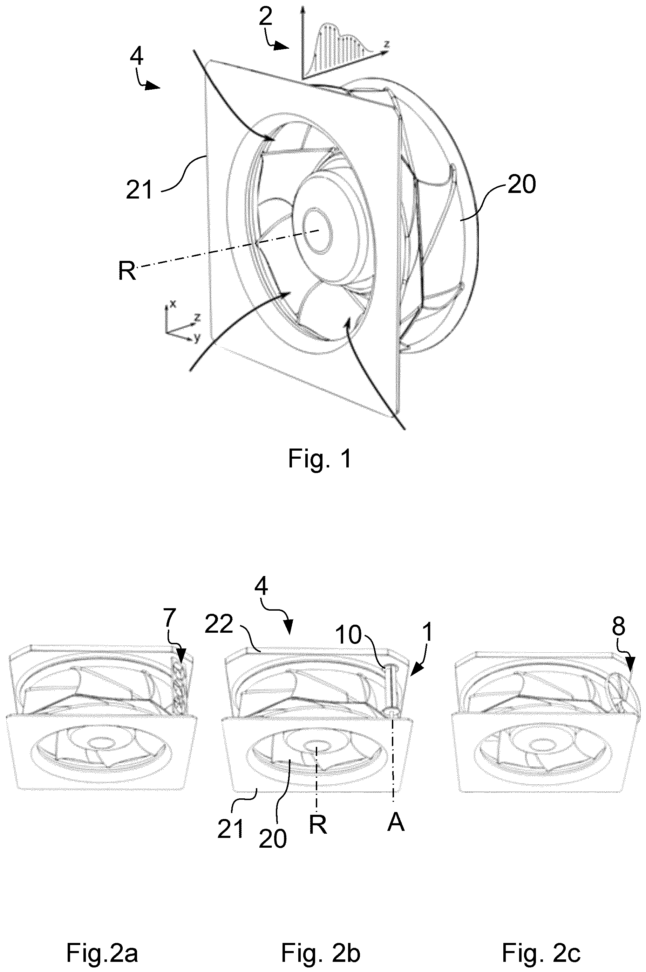

In Figur 1 ist zur Veranschaulichung eine als Radialventilator ausgebildete Strömungsmaschine 4 ohne Anemometer dargestellt. Das Ventilator-Laufrad 20 saugt saugseitig Fluid, wie beispielsweise Luft, durch eine in einer ersten Wandung 21 vorgesehene Ansaugöffnung an und stößt das Fluid nach radialaußen aus, wobei vorliegend keine das Laufrad 20 in Radialrichtung einhausende Wandung dargestellt ist. Die nach radialaußen erzeugte Strömung bzw. der von dieser Strömung bestimmte Volumenstrom ist entsprechend dreidimensional und rotationssymmetrisch um die Rotationsachse R des Ventilator-Laufrades, sodass die durchströmbare Fläche der dargestellten Konfiguration im Wesentlichen der Mantelfläche eines das Laufrad in Radialrichtung umgebenden Zylinders entspricht. Ist ein zweidimensionales Geschwindigkeitsprofil 2 entlang einer parallel der Rotationsachse R verlaufenden und radialaußen des Laufrads 20 liegenden Linie oder auch nur die mittlere Geschwindigkeit entlang der Linie bekannt, kann daraus und durch die Rotationssymmetrie der Volumenstrom bestimmt werden.

Zur Bestimmung des Geschwindigkeitsprofils 2 bzw. der mittleren Geschwindigkeit entlang der Linie an einem Radialventilator 4 gemäß Figur 1 sind in den Figur 2a bis 2c drei Varianten dargestellt, von welchen nur die Variante in Figur 2b einer erfindungsgemäßen Lösung entspricht.

Bei der Variante gemäß Fig. 2a sind als Anemometer 7 drei entlang der Linie angeordnete Flügelradanemometer in eine Blende eingebettet, wodurch eine komplexe Berechnung, bei hoher Bauteilzahl und einer verhältnismäßig starken Störung der Strömung bedingt ist. Gemäß Figur 2c ist als Anemometer ein einzelnes Flügelradanemometer 8 vorgesehen, durch welches bereits keine repräsentative Messung der mittleren Strömungsgeschwindigkeit entlang der Linie möglich ist.

Als erfindungsgemäße Lösung wird in Figur 2b ein Vertikalachsen-Anemometer 1 an dem Radialgebläse 4 bzw. der Strömungsmaschine 4 vorgesehen, welches ein Laufrad 10 vorsieht, welches um eine parallel der Ventilator-Rotationsachse R verlaufende Rotationsachse A rotierbar ist, sodass unmittelbar die mittlere Strömungsgeschwindigkeit des Geschwindigkeitsprofils 2 entlang der Linie erfasst werden kann. Da die von dem Radialventilator 4 bzw. dessen Ventilator-Laufrad 20 erzeugte Strömung bzw. deren Volumenstrom um die Rotationsachse R rotationssymmetrisch ist, kann aus der mittleren Strömungsgeschwindigkeit des zweidimensionalen Geschwindigkeitsprofils 2 entlang der Linie der von dem Ventilator-Laufrad 20 erzeugte Volumenstrom bestimmt werden.

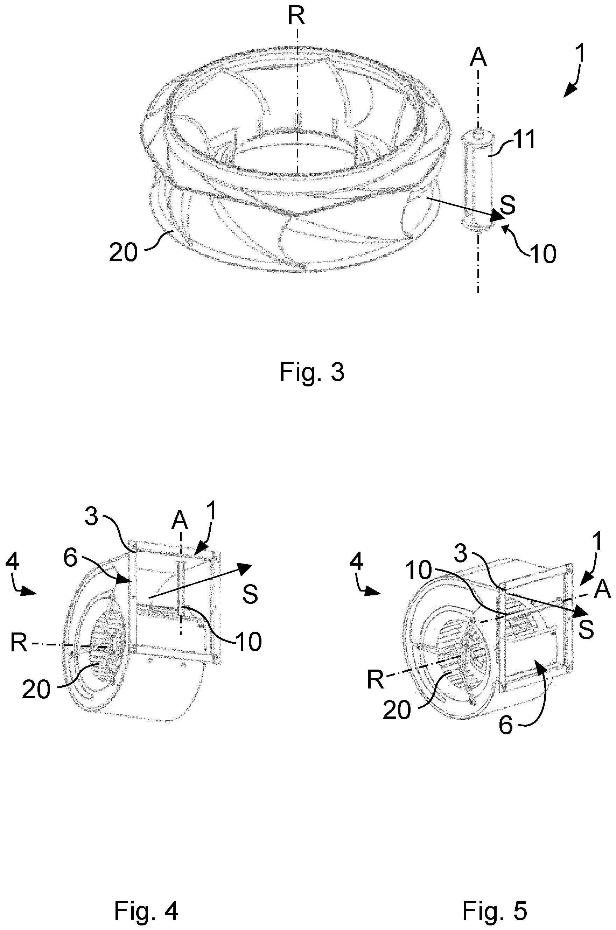

Die Darstellung in Figur 3 entspricht im Wesentlichen der Lösung gemäß Figur 2b, wobei zur weiteren Veranschaulichung ausschließlich das Ventilator-Laufrad 20 und das Anemometer-Laufrad 10 bzw. das Laufrad 10 des Anemometers 1 dargestellt sind. Dadurch wird deutlich, dass die Rotationsachse R des Ventilator-Laufrads 20 und die Rotationsachse A des Anemometer-Laufrades 10 parallel verlaufend und die Rotationsachse A des Anemometer-Laufrades 10 orthogonal zu der Hauptströmungsrichtung bzw. - achse S angeordnet sind. Die Laufradschaufeln 11 erstrecken sich dabei über die gesamte Breite der durchströmbaren Fläche, wobei die Breite vorliegend der Höhe des Ventilator-Laufrades 10 entspricht.

Obgleich es sich auch bei den Ventilatoren der Strömungsmaschinen 4 gemäß den Figuren 4 und 5 jeweils um Radialventilatoren handelt, welche also Fluid bzw. Luft in Axialrichtung entlang ihrer jeweiligen Rotationsachsen R ansaugen und nach radialaußen ausblasen, sind diese als Trommelläufer ausgebildet und in einem sich spiralförmig zu einer Ausblasöffnung bzw. einem Strömungsauslass 6 erweiterten Gehäuse angeordnet. Durch das Gehäuse bzw. dessen Strömungsauslass 6 wird die durchströmbare Fläche 3 bestimmt, sodass die Strömung entlang der Hauptströmungsachse S im Wesentlichen senkrecht zu der Fläche 3 aus dem Gehäuse austritt.

Dabei ist sowohl in der Variante gemäß Figur 4 als auch in der Ausführung gemäß Figur 5 in der durchströmbaren Fläche 3 ein Anemometer 1 bzw. ein Laufrad 10 eines erfindungsgemäßen Anemometers 1 vorgesehen. Gemäß der in Figur 4 dargestellten Ausführung verläuft die Rotationsachse A des Anemometer-Laufrades 10 orthogonal zu der Rotationsachse R des Ventilator-Laufrades 20 und in Figur 3 parallel zu dieser.

Sind die grundsätzlichen Proportionen bzw. der grundsätzliche Verlauf und damit auch vorhandene Symmetrien des dreidimensionalen Volumenstroms durch die Fläche 3 bekannt, kann der Verlauf der Rotationsachse A des Anemometer-Laufrades 10 bzw. die Anordnung des Anemometer-Laufrades 10 so gewählt werden, dass ein repräsentatives zweidimensionales Geschwindigkeitsprofil 2 erfassten werden kann, von welchem ausgehend der Volumenstrom durch die Fläche 3 bestimmbar ist.

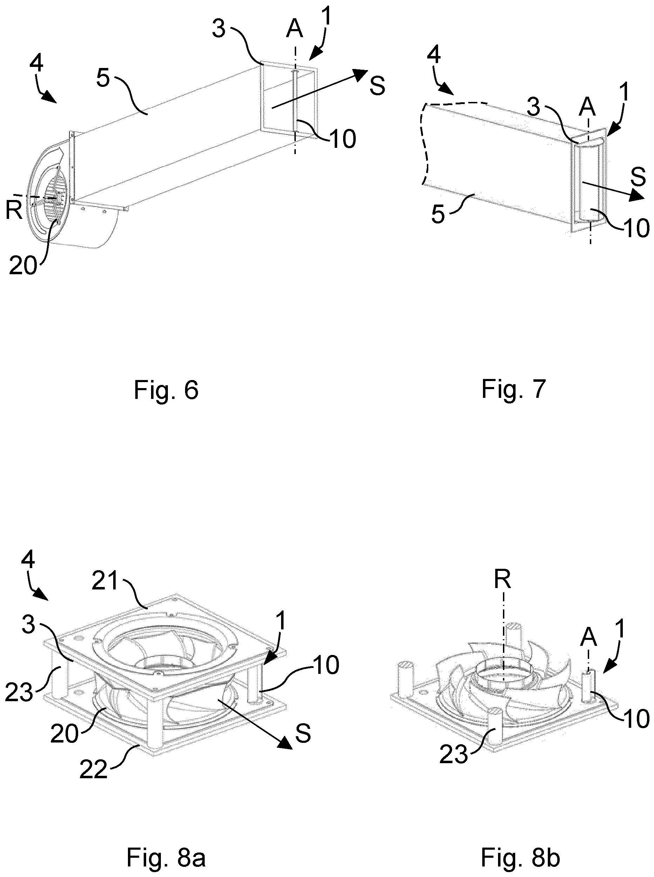

Dabei ist die Verwendung des erfindungsgemäßen Anemometers 1 nicht auf Strömungsauslässe 6 beschränkt. So ist beispielsweise in den Figuren 6 und 7 jeweils ein Strömungskanal 5 dargestellt, welche eine durchströmbare Querschnittsfläche 3 bestimmen, sodass durch die jeweiligen Anemometer 1 der Volumenstrom durch den jeweiligen Kanal 5 bestimmbar ist.

Obgleich das Verhältnis des Durchmessers D zu der Länge L des Ventilator-Laufrades 10 vorzugsweise so gewählt ist, dass das Laufrad 10 des Anemometers 1 nur einen kleinen Teil der Fläche 3 überdeckt und die Strömung entsprechend nur minimal beeinflusst, kann - wie in Figur 7 dargestellt - auch vorgesehen sein, dass das Laufrad 10 die gesamte Fläche 3 einnimmt und beispielsweise der Durchmesser D des Laufrades 10 im Wesentlichen der Breite der Fläche entspricht.

Die Figuren 8a und 8b zeigen eine Möglichkeit das Anemometer 1 besonders platzsparend in eine Strömungsmaschine 4 zu integrieren. Sieht diese beispielsweise zwei entlang der Rotationsachse R beabstandete Wandungen 21, 22 vor, welche durch parallel der Rotationsachse R verlaufende Streben 23 aneinander fixiert sind oder sieht die Strömungsmaschine 4 allgemein allel der Rotationsachse R verlaufende Streben 23 vor, kann eine der Streben durch das Laufrad 10 des Anemometers 1 ersetzt bzw. gebildet sein, sodass das Anemometer 1 keinen zusätzlichen Bauraum einnimmt.

Insbesondere in dem durch Figur 8b dargestellten Querschnitt ist erkennbar, dass das Laufrad 10 nicht zusätzlich zu den vier Streben 23 vorgesehen ist, sondern eine der Streben 23 durch das Laufrad 10 gebildet ist, die Wandungen 21, 22 also parallel der Rotationsachse R abstützt.

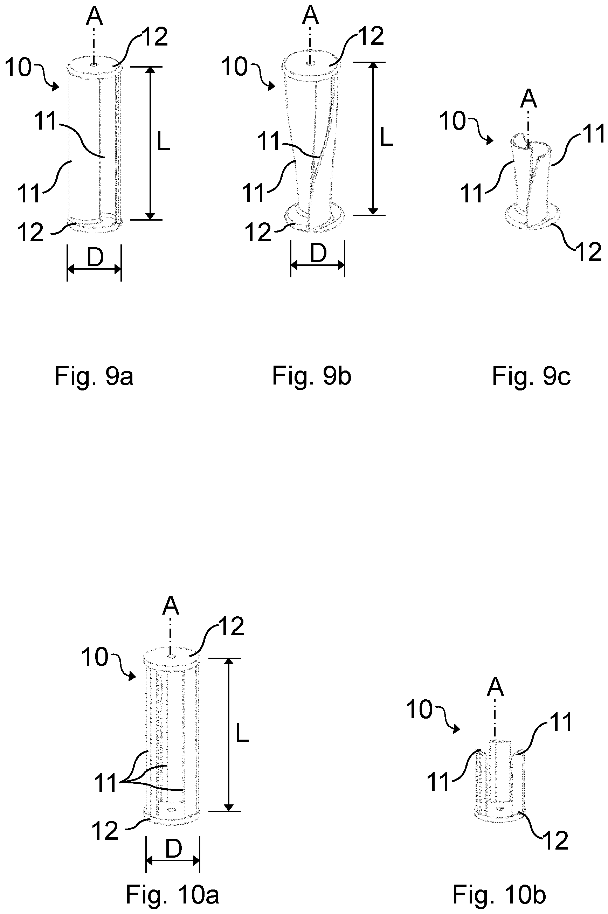

Die Figuren 9a bis 10b zeigen verschiedene Varianten des Anemometer-Laufrades 10, wobei diese gemäß den Figuren 9a bis 9c als Savonius-Rotor mit zwei Laufradschaufeln 11 und gemäß den Figuren 10a und 10b als Radialturbine mit drei Laufradschaufeln 11 ausgebildet sind.

Weiter wird deutlich, dass die Länge L des Laufrades 10 entlang der Rotationsachse A größer ist, als ein Durchmesser D des Laufrades 10 orthogonal der Rotationsachse A, sodass also die Strömungsgeschwindigkeit entlang der Linie erfassbar ist, ohne benachbarte Bereiche stark zu beeinflussen.

Obgleich ein Savonius-Rotor mit geradlinig entlang der Rotationsachse A verlaufenden Laufradschaufeln 11, wie in Figur 9a dargestellt, verwendet werden kann, kann auch ein Savonius-Rotor mit spiralförmig um die Rotationsachse A gewundenen Laufradschaufeln 11 verwendet werden, was das Anlaufverhalten solcher Laufräder 10 verbessert.

Dabei entspricht Figur 9c einem Querschnitt durch ein Laufrad 10 gemäß Figur 9b und Figur 10b einem Querschnitt durch eine Laufrad 10 gemäß Figur 10a, wobei die Schnitte jeweils die Laufradschaufeln 11 des jeweiligen Laufrades 10 orthogonal zu der Rotationsachse A schneidend verlaufen.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Strömungsmaschine (4) mit einer insbesondere von einem Kanal (5) und/oder einem Strömungsauslass (6) bestimmten sowie entlang einer Hauptströmungsachse (S) von einem Fluid durchströmbaren Fläche (3) und einem Vertikalachsen-Anemometer (1) zur Erfassung einer repräsentativen mittleren Strömungsgeschwindigkeit eines zweidimensionalen Geschwindigkeitsprofils (2) für die Bestimmung eines dreidimensionalen und insbesondere ein vorbekanntes Profil und/oder eine vorbekannte Symmetrie aufweisenden Volumenstroms durch eine entlang einer Hauptströmungsachse (S) von einem Fluid durchströmbaren Fläche (3),
wobei das Vertikalachsen-Anemometer (1) ein Laufrad (10) mit zumindest einer Laufradschaufel (11) aufweist, welches um eine Rotationsachse (A) rotierbar ist,
wobei sich die Rotationsachse (A) entlang einer Linie über die durchströmbare Fläche (3) erstreckt und das Laufrad (10) und/oder die zumindest eine Laufradschaufel (11) ausgebildet ist, sich parallel der Rotationsachse (A) über die durchströmbare Fläche (3) zu erstrecken, sodass durch die Rotation des Laufrades (10) die Strömungsgeschwindigkeit entlang der Linie als mittlere Strömungsgeschwindigkeit des entlang der Linie verlaufenden zweidimensionalen Geschwindigkeitsprofils (2) erfassbar ist,
wobei die Strömungsmaschine (4) ferner ein Ventilator-Laufrad (20) zur Erzeugung der Strömung durch die Fläche (3) aufweist, welches um eine Ventilator-Rotationsachse (R) rotierbar ist,
wobei die Rotationsachse (A) des Anemometers (1) und die Ventilator-Rotationsachse (R) parallel oder orthogonal zueinander verlaufen.

2. Strömungsmaschine nach Anspruch 1,
wobei die Rotationsachse (A) orthogonal zu der Hauptströmungsachse (S) angeordnet ist.

3. Strömungsmaschine nach Anspruch 1 oder 2,
wobei das Laufrad (10) als Savonius-Rotor oder als Darrieus-Rotor oder Radialturbine ausgebildet ist.

4. Strömungsmaschine nach einem der vorhergehenden Ansprüche,
wobei ein Verhältnis eines Durchmessers (D) des Laufrads orthogonal der Rotationsachse (A) zu einer Länge (L) des Laufrads (10) entlang der Rotationsachse (A) 0,01 bis 1, insbesondere 0,05 bis 0,5, weiter insbesondere 0,1 bis 0,3 ist.

5. Strömungsmaschine nach einem der vorhergehenden Ansprüche,
wobei das Laufrad (10) entlang der Rotationsachse (A) einen Abschnitt aufweist oder in mehrere Abschnitte geteilt ist und je Abschnitt zwei oder drei Laufradschaufeln (11) aufweist.

6. Strömungsmaschine nach einem der vorhergehenden Ansprüche,
wobei die zumindest eine Laufradschaufel (11) die Rotationsachse (A) gewunden umläuft.

7. Strömungsmaschine nach dem vorhergehenden Anspruch,
wobei die zumindest eine Laufradschaufel (11) die Rotationsachse (A) helixförmig umläuft.

8. Strömungsmaschine nach einem der vorhergehenden Ansprüche,
wobei das Laufrad (10) zwei das Laufrad (10) entlang der Linie jeweils stirnseitig abschließende Endscheiben (12) aufweist, zwischen welchen sich die zumindest eine Laufradschaufel (11) erstreckt, sodass das Laufrad (10) im Wesentlichen zylindrisch ist.

9. Strömungsmaschine nach einem der vorhergehenden Ansprüche,
wobei das Anemometer (1) ferner zumindest ein Leitelement aufweist, welches entlang der Hauptströmungsachse (S) stromauf des Laufrades (10) angeordnet und ausgebildet ist, die Strömung und insbesondere die auf das Laufrad (10) treffende Strömung gleichzurichten, umzulenken und/oder abzuschatten.

10. Strömungsmaschine nach einem der vorhergehenden Ansprüche,
wobei das Anemometer (1) ferner eine Steuereinheit aufweist, welche ausgebildet ist, aus einer Drehzahl des Laufrades (10) die mittlere Geschwindigkeit der Strömung entlang der Linie zu bestimmen und aus der mittleren Geschwindigkeit der Strömung entlang der Linie den Volumenstrom durch die Fläche (3) zu bestimmen.

11. Strömungsmaschine nach dem vorhergehenden Anspruch,
wobei das Anemometer (1) ferner zumindest einen Drehzahlsensor zur Erfassung der Drehzahl des Laufrades (10) aufweist, welcher signaltechnisch mit der Steuereinheit verbunden ist,
wobei der Drehzahlsensor insbesondere durch einen Hall-Sensor und einem mit dem Laufrad (10) rotierenden magnetischen Element gebildet ist.

12. Strömungsmaschine nach einem der vorhergehenden Ansprüche 10 oder 11,
wobei die Steuereinheit ferner ausgebildet ist, zumindest einen Parameter einer die Strömung erzeugenden Vorrichtung zu erfassen und aus der mittleren Geschwindigkeit sowie dem zumindest einen Parameter den Volumenstrom durch die Fläche (3) zu bestimmen.

13. Strömungsmaschine nach dem vorhergehenden Anspruch,
wobei der Parameter eine Drehzahl eines Ventilator-Laufrades (20) und/oder einen Motorstrom und/oder eine Motordrehzahl eines das Ventilator-Laufrad (20) antreibenden Motors ist.

14. Strömungsmaschine nach einem der vorhergehenden Ansprüche,
aufweisend ein das Ventilator-Laufrad (20) zumindest abschnittsweise umgebende Gehäuse mit zumindest zwei entlang der Ventilator-Rotationsachse (R) beabstandeten Wandungen (21,22), welche von zumindest zwei Streben (23) beabstandet werden,
wobei das Anemometer (1) eine der Streben (23) bildet, ersetzt oder in die Strebe (23) integriert ist.

15. Strömungsmaschine nach einem der vorhergehenden Ansprüche,
aufweisend eine weitere Steuereinheit, welche ausgebildet ist, mit dem von dem Anemometer bestimmten Volumenstrom einen Betriebspunkt der Strömungsmaschine zu bestimmen und/oder die Strömungsmaschine mit dem von dem Anemometer bestimmten Volumenstrom zu regeln.
